# EUROPEAN PATENT SPECIFICATION

(11) **EP 3 886 124 B1**
(45) Date of publication and mention of the grant of the patent: **09.12.2026**
(21) Application number: 19939433.9
(22) Date of filing: 05.08.2019
(51) Int. Cl.: C09D 11/037, B22F 1/00, B22F 1/17, B42D 25/369, B42D 25/378, C09D 11/52, C22C 38/10, H01B 1/22, H01F 1/06, H05K 1/09

(54) **MAGNETIC PARTICLE FOR SECURITY INK AND SECURITY INK COMPRISING SAME**
MAGNETISCHE PARTIKEL FÜR SICHERHEITSTINTE UND SICHERHEITSTINTE DAMIT
PARTICULE MAGNÉTIQUE POUR ENCRE DE SÉCURITÉ ET ENCRE DE SÉCURITÉ LA COMPRENANT

(30) Priority: 29.07.2019 KR 20190091611
(43) Date of publication of application: 29.09.2021
(73) Proprietor: Korea Minting, Security Printing & ID Card Operating Corp., Daejeon 34132 (KR)
(72) Inventor: KIM, Soo Dong, Daejeon 34050 (KR); CHOE, Won Kyun, Daejeon 34198 (KR); JOO, Sung Hyun, Sejong 30121 (KR); KIM, Hong Keon, Daejeon 34090 (KR); KIM, Hyun Soo, Daejeon 34185 (KR)
(74) Representative: BCKIP Part mbB
(86) International application number: PCT/KR2019/009707
(87) International publication number: WO 2021/020635

(56) References cited:
- WO-A1-2019/132232
- JP-A- 2002 353 016
- KR-A- 20120 077 258
- KR-A- 20170 078 023
- KR-B1- 101 339 080
- KR-B1- 101 718 505
- KR-B1- 101 718 505
- KR-B1- 101 869 484
- KR-B1- 101 912 100
- KR-B1- 101 912 100
- US-A1- 2005 089 683
- US-A1- 2005 285 084
- US-A1- 2010 140 916

## Description

### Technical Field

The present application claims priority to Korean Patent Application No. 10-2019-0091611, filed July 29, 2019.

The present disclosure relates to a magnetic particle for security ink and to security ink including the same.

### Background Art

There has been increasing use of a magnetic material as a security factor to prevent the counterfeit or falsification of secure documents, such as bank bills, while providing product authentication thereof. When a secure document is printed with a pattern of security ink manufactured by mixing a magnetic material with ink, it is possible to determine whether or not the secure document is counterfeited or falsified using a detection device able to detect magnetic materials.

In general, a magnetic material is contained in security ink as minute particles in the scale of micrometers. In particular, in order to form a security ink pattern by an intaglio printing method, the size of magnetic particles contained in security ink must be managed to not exceed a predetermined numerical value. In this regard, in a magnetic particle manufacturing process, a classification operation is performed to select particles having a predetermined size or smaller to be used in security ink.

In addition, since magnetic particles typically have a dark color, a technology of imparting a brighter color to the magnetic particles by forming a metal coating layer made of silver (Ag) and the like on the surface of the magnetic particles is known. However, during the metal coating operation, the particle size of the magnetic particles may be unintentionally increased beyond an expected range in some cases. This may cause a problem during the printing of security ink.

In addition, the viscosity of security ink is cautiously designed to obtain printability. However, in some cases, some types of magnetic particles may significantly increase the viscosity of security ink, thereby damaging the printability of the security ink.
Prior art document KR 101912100 B discloses AlNiCo-based magnetic particles covered with a metal shell. Prior art document WO 2019/132232 A1 magnetic particles comprising a magnetic core, a zirconium oxide coating layer formed on the magnetic core and a silver coating layer formed on the zirconium oxide coating layer. Prior art document KR 101718505 B) concerns magnetic particles for use in security ink, wherein methods are pro-posed to control the particle size distribution and the coercive force of the particles. However, none of these documents is concerned with the viscosity of security ink in which these particles are contained.

### Disclosure

### Technical Problem

Accordingly, the present disclosure has been made keeping in mind the above problems occurring in the prior art, and an objective of the present disclosure is to provide a magnetic particle, the particle size of which is uniformly maintained even after a metal coating layer is formed.

Another objective of the present disclosure is to provide a magnetic particle configured to not significantly increase the viscosity of security ink and security ink including the same.

The objectives of the present disclosure are not limited to the aforementioned description, and other objectives and advantages of the present disclosure not explicitly described will be clearly understood from the description provided hereinafter.

### Technical Solution

The invention is defined in the enclosed independent claims 1 and 6. Embodiments are defined in the dependent claims. In order to accomplish the above objective, a magnetic particle includes a magnetic material core and a metal coating layer provided outside the magnetic material core. The surface roughness (Ra) of the magnetic particle is 0.14 µm or less. A metal oxide layer may be provided as an intermediate layer between the magnetic material core and the coating layer.

The reflectivity of the magnetic particle for 900 nm light may be 60% or more. The particle size (D₉₀) of the magnetic particle may be 15 µm or less. The oil absorbency of the magnetic particle may be 20 or less.

The magnetic material core may be an AlNiCo particle, the intermediate layer may be a ZrO₂ layer, and the metal coating layer may be a Ag coating layer. When the metal coating layer is the Ag coating layer, the metal coating layer may be produced by electroless plating using ethylenediamine as a complexing agent.

In addition, a magnetic particle according to embodiments of the present disclosure includes a magnetic material core and a metal coating layer provided outside the magnetic material core. The area ratio of an abnormal protrusion provided on a surface of the metal coating layer may be 2% or less of the entire area of the magnetic particle.

Security ink according to embodiments of the present disclosure includes any one of the above-described magnetic particles. The viscosity of the security ink may be 12 Pa·sec or less.

### Advantageous Effects

According to the present disclosure, in the magnetic particle and the security ink, the surface roughness Ra is equal to or less than 0.14 µm, and more particularly, 0.13 µm after the formation of the metal coating layer. Thus, even after the formation of the metal coating layer, the particle size may be uniformly maintained and the viscosity of the security ink may not be significantly increased.

However, the effects of the present disclosure are not limited to the aforementioned description, and other effects of the present disclosure not explicitly described will be clearly understood from the description provided hereinafter by those skilled in the technical field to which the present disclosure pertains.

### Description of Drawings

FIG. 1 is a conceptual view illustrating a magnetic particle according to embodiments of the present disclosure;
FIG. 2 is a flowchart illustrating a method of forming a silver (Ag) coating layer according to embodiments of the present disclosure;
FIG. 3 compares surface SEM images according to whether or not the particle size is increased after the formation of the Ag coating layer; and
FIG. 4 compares SEM images of samples of Example of the present disclosure and Comparative Examples.

### Mode for Invention

Hereinafter, exemplary embodiments of the present disclosure will be described in detail while not being limited or restricted thereby. In the following description of the present disclosure, a detailed description of related known technology will be omitted in the situation in which the subject matter of the present disclosure may be rendered rather unclear thereby. In addition, unless otherwise defined, all terms used herein should be construed as having the same meaning as commonly understood by those skilled in the technical field to which the present disclosure pertains.

The present disclosure relates to a magnetic particle having a structure in which a metal coating layer is formed on a magnetic material core and security ink including the same. An intermediate layer configured to improve the durability and chemical resistance of the magnetic particle may be formed between the magnetic material core and the metal coating layer.

While manufacturing the magnetic particle having the above-described structure, the inventors discovered that a phenomenon in which the particle size of the magnetic material core is significantly increased to exceed an expected range, due to the thickness of the coating layer, after the formation of the coating layer, even in the case that the particle size of the magnetic material core has been cautiously adjusted to not exceed a predetermined value. While investigating the reason, the inventors discovered that an increase in the surface roughness due to the formation of a non-uniform metal coating layer, and more particularly, the formation of a local abnormal protrusion, is related to an increase in the particle size, thereby leading to the present disclosure.

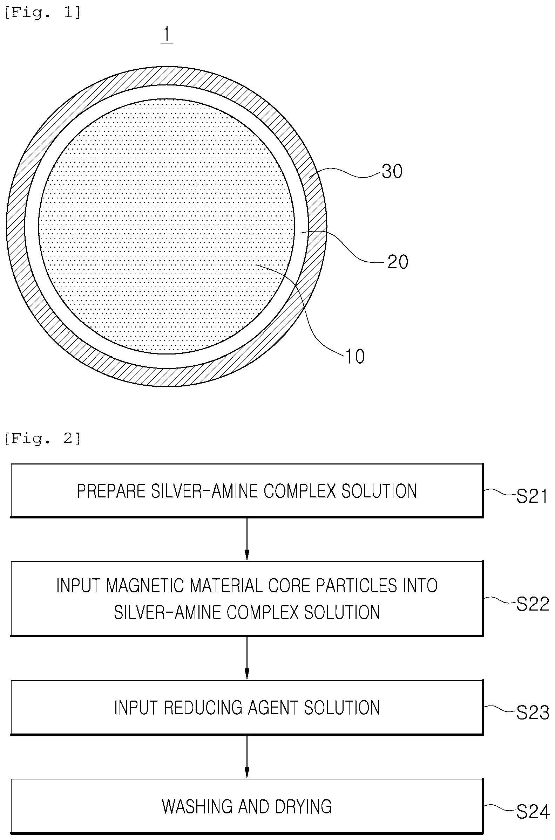

FIG. 1 is a conceptual view illustrating a magnetic particle according to embodiments of the present disclosure. Referring to FIG. 1, the magnetic particle 1 according to embodiments of the present disclosure includes a magnetic material core 10 and a metal coating layer 30 formed outside the magnetic material core 10. An intermediate layer 20 may be formed between the magnetic material core 10 and the metal coating layer 30.

The magnetic material core 10 is a component imparting magnetism to the magnetic particle 1, and may be a magnetic metal or a magnetic metal alloy. The magnetic material core 10 may be made from a material including at least one selected from the group consisting of Fe, Cu, Al, Ni, Co, Nb, Nd, Si, B, Cr, and Sm. Particularly, the material may be AlNiCo, FeCrCo, or CuNiFe. The magnetic material core 10 may be substantially spherical, and the particle size thereof may be adjusted to be equal to or smaller than 15 µm to be used in security ink. Here, the particle size may refer to D₉₀, i.e., the particle size corresponding to 90% of the cumulative distribution of particle size.

The magnetic material core 10 may be manufactured by the following method. First, a molten metal is produced by melting a raw material in the form of powder or an ingot in an inert gas atmosphere, and then minute particles are produced by atomization. Specifically, the minute particles may be produced by injecting the molten metal into a vacuum atomization confinement and spraying a cooling medium through a spray nozzle at a predetermined pressure. As the cooling medium, water able to produce ultrafine particles at an excellent yield may be used. Here, the water may contain an antioxidant such as urea. The produced minute particles may be heat-treated in an inert gas atmosphere to improve the coercive force thereof. After the heat treatment, particles having a predetermined size or smaller may be selected by a classification operation. The classification operation may be implemented as air current classification. Particles having a particle size D₉₀ of 15 µm or smaller may be obtained by the classification operation.

The intermediate layer 20 may be formed between the magnetic material core 10 and the metal coating layer 30 to improve the durability and chemical resistance of the magnetic particle 1. The intermediate layer 20 may help the metal coating layer 30 be uniformly formed. The intermediate layer 20 may be made from a metal oxide, such as TiO₂ or ZrO₂. The intermediate layer 20 may be formed at a thickness of from about 5 nm to about 15 nm. The intermediate layer 20 may be formed by a sol-gel coating method, but a forming method thereof is not specifically limited.

The metal coating layer 30 may impart a brighter color to the magnetic particle 1 by reflecting light. The metal coating layer 30 may be an Ag coating layer having superior reflectivity. The metal coating layer 30 may be formed at a thickness of from about 50 nm to about 100 nm. When the metal coating layer 30 is the Ag coating layer, the Ag content may be adjusted to be in the range of from 10% to 20% by weight with respect to the weight of the magnetic material core 10 in order to help the coating layer be uniformly formed.

The metal coating layer 30 may be formed by an electroless plating method. For example, the Ag coating layer may be formed according to the sequences illustrated in FIG. 2.

Referring to FIG. 2, a method of forming an Ag coating layer according to embodiments of the present disclosure may include: step S21 of preparing a silver-amine complex solution; step S22 of inputting hard magnetic material core particles into the prepared silver-amine complex solution; step S23 of inputting a reducing agent solution; and a washing and drying step S24.

First, the step S21 may be a step of preparing the silver-amine complex solution by inputting a Ag precursor, a pH adjuster, and a complexing agent into a solvent and stirring the resultant mixture. Here, the solvent may be distilled water, the Ag precursor may be silver nitrate (AgNO₃), and the complexing agent may be ammonia (NH₃) or ethylenediamine. Ammonia may be input in the form of ammonium hydroxide (NH₄OH) or ammonium salt. Particularly, ethylenediamine may be used to uniformly form the Ag coating layer. The stirring may be performed until a brown precipitate is formed.

The step S22 is a step of inputting the hard magnetic material core particles into the prepared silver-amine complex solution. The hard magnetic material core particles may be particles respectively having the intermediate layer formed on the surfaces thereof. Each of the hard magnetic material core particles may be AlNiCo particles, and the intermediate layer may be a ZrO₂ layer. The hard magnetic material core particles may be particles, the particle size D₉₀ of each of which is adjusted to be equal to or smaller than 15um. After the hard magnetic material core particles are input, a stirring step may be performed to help the magnetic material core particles be better mixed with the silver-amine complex solution.

Subsequently, the reducing agent solution is input in the step S23. The reducing agent solution may include glucose, fructose, galactose, potassium tartrate, potassium sodium tartrate, sodium tartrate, stearyl tartrate, formaldehyde, and the like. Particularly, a solution formed by dissolving glucose and potassium sodium tartrate in distilled water may be used.

Finally, in the step S24, the hard magnetic particles having the silver coating layer may be separated, followed by washing and drying. The magnetic particles may be separated using a magnet, and the washing may be performed several times using ethanol.

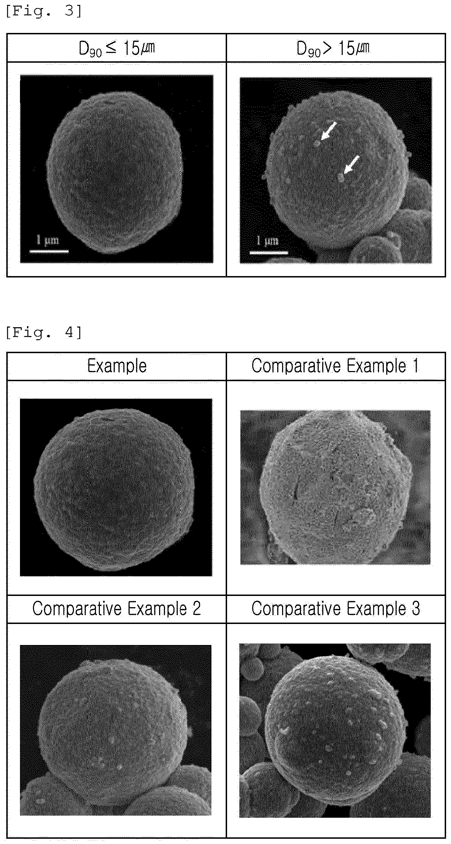

Although the metal coating layer forming operation was performed by selecting the magnetic material cores 10 respectively having a predetermined size or smaller, i.e., a particle size D₉₀ of 15 µm or smaller, by the classification operation, it was found in some cases that the particle size was significantly increased after the coating according to metal coating conditions. In order to analyze the reason, a sample exhibiting normal particle size distribution after the formation of the Ag coating layer and a sample exhibiting an abnormal increase in the particle size after the formation of the Ag coating layer were extracted, and SEM (scanning electron microscope) analysis was performed to the samples. The results are illustrated in FIG. 3.

Referring to FIG. 3, a single spherical magnetic particle having a Ag coating layer formed relatively uniformly was observed in a normal sample having a particle size D₉₀ of 15 µm or smaller. In contrast, in a sample, the particle size D₉₀ of which was analyzed to exceed 15 µm, a cluster of several magnetic particles was observable (see the bottom right of the image). That is, it is presumed that the clustering of magnetic particles occurred during the formation of the Ag coating layer and the particle size was significantly increased by this clustering.

When such magnetic particles having an increased particle size as above are used in security ink, a problem may occur when forming a magnetic pattern by an intaglio printing method. In addition, the increased surface area due to the clustering of magnetic particles may increase oil absorbency, thereby influencing the physical properties of security ink. Specifically, the viscosity of the security ink may be significantly increased to be a designed value or higher, thereby damaging the printability.

In samples, the particle size of which is significantly increased, a phenomenon in which the Ag coating layer is not uniformly formed and abnormal protrusions are locally formed is observed (see arrows in FIG. 3), unlike normal magnetic particle samples. Although the mechanism has not been clearly identified, it is presumed that the formation of the abnormal protrusions during the formation of the Ag coating is correlated with the increased particle size of the magnetic particles.

The formation of the local abnormal protrusions may cause an increase of the surface roughness of the magnetic particles. Thus, it may be important to manage the surface roughness of the metal coating layer to be equal to or less than a predetermined value in order to form magnetic particles without any local abnormal protrusion or an increase in particle size.

From this point of view, the magnetic particle according to embodiments of the present disclosure is characterized in that the surface roughness of the metal coating layer is equal to or smaller than a predetermined value. Specifically, the surface roughness Ra is equal to or less than 0.14 µm, and more particularly, 0.13 µm. The surface roughness by be measured using a confocal laser scanning microscope (CLSM).

In addition, it may be important to manage the surface roughness of the metal coating layer to be equal to or less than a predetermined value while managing the reflectivity to be equal to or higher than a predetermined value in order to produce a magnetic particle having a brighter color. Therefore, in the magnetic particle according to embodiments of the present disclosure, reflectivity for 900 nm light may be 60% or higher.

In addition, in the magnetic particle according to embodiments of the present disclosure, an area where local abnormal protrusions are formed may be 2% or less than the surface area of the magnetic particle. Here, an area of an abnormal protrusion may be calculated by extracting a portion of the central area of the magnetic particle from an SEM image. For example, a square area having about 50% of the diameter of the magnetic particle may be extracted as a target region, and the area ratio of the abnormal protrusion included in the target region with respect to the total area of the target region may be calculated. The area of the target region and the area of the abnormal protrusion included in the target region may be automatically calculated by an image processing algorithm but is not limited thereto.

In the magnetic particle according to embodiments of the present disclosure, the oil absorbency may be equal to or less than 20, and more particularly, 15. Here, the oil absorbency indicates the amount of oil (g) absorbed per 100g of a magnetic particle sample. Maintaining the oil absorbency of the magnetic particle to be low may minimize a phenomenon in which the viscosity of security ink containing the magnetic particles is increased by the magnetic particles.

The present disclosure provides security ink containing magnetic particles as an embodiment. The security ink according to the present disclosure may include, by weight, 5% to 15% of magnetic particles as described above, 20% to 40% of varnish, 30% to 50% of pigment, 5% to 10% of surfactant, 1% to 10% of wax, and 2% to 10% of solvent.

For example, the varnish may be a thermoplastic resin, a thermosetting resin, or a photocuring resin, or may be one substance soluble in an organic solvent. The thermoplastic resin may include petroleum resin, casein, shellac, rosin-modified maleic acid resin, rosin-modified phenolic resin, nitrocellulose, cellulose acetate butyrate, cyclized rubber, chlorinated rubber, oxidized rubber, hydrochloric acid rubber, phenolic resin, alkyd resin, polyester resin, unsaturated polyester resin, amino resin, epoxy resin, vinyl resin, vinyl chloride resin, vinylidene chloride resin, chloride Vinyl acetate resin, ethylene vinyl acetate resin, acrylic resin, methacrylic resin, polyurethane resin, silicone resin, fluorine resin, drying oil, synthetic drying oil, styrene-maleic acid resin, styrene-acrylic resin, polyamide resin, butyral resin, and the like. The thermosetting resin may include epoxy resin, phenol resin, benzoguanamine resin, melamine resin, urea resin, and the like. The photocuring resin (or photosensitive resin) may be a resin prepared by introducing a photo-crosslinkable group, such as a (meth)acrylyl group, or styryl group, into a linear polymer having a reactive substituent, such as a hydroxy group, a carboxyl group, or an amino group, by reacting the linear polymer with a (meth)acrylic compound having a reactive substituent, such as an isocyanate group, an aldehyde group, or an epoxy group, or cinnamic acid. In addition, a product prepared by half-esterifying a linear polymer containing an anhydride, such as a styrene-maleic anhydride copolymer or an α-olefin-maleic anhydride copolymer, with a (meth)acrylic compound having a hydroxy group, such as a hydroxyalkyl(meth)acrylate, may be used.

The pigment may be implemented as, but not specifically limited to, for example, soluble azo pigment, insoluble azo pigment, phthalocyanine pigment, halogenated phthalocyanine pigment, quinacridone pigment, isoindolinone pigment, isoindoline pigment, perylene pigment, perinone pigment, dioxazine pigment, anthraquinone pigment, dianthraquinonyl pigment, anthrapyrimidine pigment, andanthrone pigment, indanthrone pigment, flavanthrone pigment, pyranthrone pigment, diketopyrrolopyrrole pigment, and the like.

The surfactant may be one or more selected from the group consisting of fluorinated surfactant, polymerizable fluorinated surfactant, siloxane surfactant, polymerizable siloxane surfactant, polyoxyethylene surfactant, derivatives thereof, and the like. The type of the surfactant is not specifically limited.

The wax may be a powder type wax able to reduce the tack of the resin. For example, the wax may include one or more selected, but not limited to, from among polyethylene wax, amide wax, erucamide wax, polypropylene wax, paraffin wax, Teflon, carnauba wax, and the like.

The solvent is not specifically limited as long as the solvent is a general organic solvent that may uniformly mix substances, such as wax, pigment, and varnish. Available solvents may be one or more selected from among ethyl acetate, n-butyl acetate, isobutyl acetate, toluene, xylene, acetone, hexane, methyl ethyl ketone, cyclohexanone, propylene glycol monomethyl ether acetate, diethylene glycol monoethyl ether acetate, diethylene glycol diethyl ether, diethylene glycol monobutyl ether, dipropylene glycol monomethyl ether acetate, diethylene glycol monoethyl acetate, diethylene glycol monobutyl ether acetate, and the like.

The security ink according to embodiments of the present disclosure may have a viscosity of 12 Pa·sec or less, and particularly, a viscosity ranging from 8 Pa·sec to 12 Pa·sec.

Hereinafter, the present disclosure will be described in more detail with reference to specific examples.

### 1. Manufacture of Magnetic Material Core

For production of AlNiCo magnetic material cores, after raw material powder having a designed composition was input into a furnace, a molten metal was formed by heating the furnace. The designed composition included 6% of Al, 15% of Ni, 22% of Co, 4% of Ti, 3% of Cu, and 50% of Fe, and the heating was performed at 1600°C in the furnace in an inert gas atmosphere. The raw material powder was implemented as powder having a purity of 99.9% or higher. The molten metal was input into a vacuum atomization confinement and sprayed at 600 bars to produce minute particles while using a 25% urea-water solution as a cooling medium.

The produced minute particles were heat-treated at 750°C in an Ar gas atmosphere for 1 hour. Particles produced after the heat treatment were classified using air currents in a cyclone method in conditions in which the revolution speed was 7500 rpm and the air injection rate was 2.8 m³/min. Particles having a particle size D₉₀ of 15 µm or smaller were produced by the air current classification.

### 2. Formation of Intermediate Layer

After magnetic material cores 10 g and distilled water 10 ml were input into ethanol, the resultant solution was dispersed by ultrasonic irradiation. A solution in which zirconium-tert-butoxide 10 ml and ethanol 170 ml are mixed was slowly input into the dispersed solution. After the solution was stirred at a temperature of 85°C at a revolution rate of 300 rpm for 3 hours, particles having a ZrO₂ coating layer were separated using a magnet. The particles were washed two times with ethanol and then were dried.

### 3. Formation of Metal Coating Layer

Silver nitrate (AgNO₃) 21 g and sodium hydroxide (NaOH) 4 g were input into distilled water 1,200 ml, and a complexing agent 34 ml was added thereto. The resultant solution was stirred until a brown precipitate changed into a transparent silver-amine complex solution. The complexing agent was implemented as ammonia (NH₃) or ethylenediamine. Ammonia was input in the form of ammonium hydroxide (NH₄OH).

60 g of particles having a ZrO₂ coating layer was input into the silver-amine complex solution, followed by stirring at a speed of 300 rpm for 30 minutes. A reducing agent solution produced by dissolving glucose 20 g and potassium tartrate into distilled water 400 ml, followed by stirring at a speed of 300 rpm for 1 hour, thereby forming a Ag coating layer. Manufactured magnetic particles were separated using a magnet, and then, were washed two times with ethanol and dried.

In the formation of the Ag coating layer, the reaction temperature was maintained in the range of from about 3°C to 5°C. For the purpose comparison, other samples were produced at a reaction temperature of 25°C. The content of potassium tartrate was varied in a range of from about 5% to 10% of the mass of silver nitrate.

Conditions of the process of forming the Ag coating layer in samples of Example and Comparative Examples are as illustrated in Table 1.

**Table 1**

| Classification | Example | Comp. Ex. 1 | Comp. Ex. 2 | Comp. Ex. 3 | Comp. Ex. 4 |
|---|---|---|---|---|---|
| Ratio of Potassium Tartrate* (%) | 0.071 | 0.1 | 0.05 | 0.071 | 0.071 |
| Reaction Temperature (°C) | 3-5 | 3-5 | 3-5 | 25 | 3-5 |
| Complexing Agent | Ethylene diamine | Ethylene diamine | Ethylene diamine | Ethylene diamine | Ammonia |

| | | | | | |
|---|---|---|---|---|---|
| Note) *:$\left(Potassium Tartrate \left(g\right)\right) / \left(Silver Nitrate \left(g\right)\right) X 100$ | | | | | |

### 4. Manufacture of Security Ink

Security ink containing, by weight, 10% of manufactured magnetic particles was manufactured. The security ink also contained, by weight, 32% of varnish, 5% of filler, 34% of extender pigment, 8% of mixed wax, 2% of aliphatic hydrocarbon, 2% of solvent (diethylene glycol monobutyl ether), and 2% of surfactant, in addition to the magnetic particles.

### 5. Result of Analysis

The surface roughness, reflectivity, particle size, and oil absorbency of the magnetic particle samples of Example and Comparative Examples were analyzed. The viscosities of security ink samples manufactured by containing the magnetic particles were compared and analyzed. The surface roughness Ra was analyzed using confocal laser scanning microscopy (CLSM), and the reflectivity was measured using 900 nm light. The particle size was measured using a particle size analyzer (Beckman Coulter Multisizer 3), and the measurement of the oil absorption value was performed according to the test method of measuring the oil absorption value of a pigment or an extender pigment, defined as part of the Korean Industrial Standards (KS) M ISO 787.

The surfaces of the magnetic particle samples were observed using Magellan 400, i.e., a scanning electron microscope (SEM) available from FEI company. The central portion of the surface image of each of the samples was selected as a target region, an abnormal protrusion in the target region was observed, and then, the area ratio of the abnormal protrusion was calculated.

The viscosity of the security ink was measured using a rotary viscosity meter (Haake Rotovisco) for 30 seconds, under conditions of a sample holder distance 0.1 mm, a temperature 40°C, and a shear rate 1,000 S⁻¹.

The results of the analysis of the properties of the samples of Example and Comparative Examples are as illustrated in Table 2. The results obtained by observing the surfaces of the magnetic particles of Example and Comparative Examples 1 to 3 are illustrated in FIG. 4.

**Table 2**

| Classification | Ra (µm) | AR*¹ (%) | Refl*² (%) | GS*³ (µm) | OA*⁴ (g/100g) | Viscosity (Pa·sec) |
|---|---|---|---|---|---|---|
| Example | 0.125 | 0 | 64.6 | 13.2 | 14.01 | 8 |
| Comp. Ex. 1 | 0.144 | 0 | 51.1 | 12.9 | 13.54 | 8 |
| Comp. Ex. 2 | 0.188 | 2.6 | 66.2 | 19.2 | 21.23 | 13 |
| Comp. Ex. 3 | 0.217 | 4.8 | 65.5 | 21.4 | 24.12 | 16 |
| Comp. Ex. 4 | 0.162 | - | 61.2 | 18.7 | 21.50 | 14 |

| | | | | | | |
|---|---|---|---|---|---|---|
| Note) *1: Area ratio of abnormal protrusion *2: Reflectivity (900 nm) *3: Particle size (D₉₀) *4: Oil absorbency | | | | | | |

According to the results of Table 2, the sample of Example had a relatively small value of surface roughness Ra of 0.125 µm and a high value of reflectivity of 64.6 %. Thus, it was found that a uniform Ag coating layer was formed in the sample of Example. In addition, no abnormal protrusion was present according to the SEM measurement results in FIG. 4. According to the result of the particle size analysis, the particle size D₉₀ was 13.2 µm, which indicates that there was no increase in the particle size during the formation of the Ag coating layer.

In the sample of Comparative Example 1, the surface roughness Ra was a relatively-small value of 0.144 µm, and no increase in the particle size was observed. However, the reflectivity had a low value of 51.1%. This may be confirmed from the SEM measurement results in FIG. 4, which reveals that the Ag coating layer failed to cover the entire area of the magnetic particle and a local uncoated area was present. That is, even in the case that the surface roughness Ra is 0.15 µm or less and the oil absorbency or the viscosity is maintained to be low as in the sample of Comparative Example 1, when the reflectivity is 60% or lower, the sample is inappropriate for magnetic particles to be used in bright-color security ink.

In each of the samples of Comparative Examples 2, 3, and 4, the reflectivity was 60% or higher, whereas the surface roughness Ra was 0.15 µm or more. In addition, it was analyzed that the particle size D₉₀ was also significantly increased during the formation of the Ag coating layer. These led to increases in the oil absorbency and the viscosity, which may be confirmed from the analysis results in Table 2. From the SEM measurement results regarding the samples of Comparative Examples 2 and 3 (FIG. 4), it may be confirmed that the abnormal protrusion was formed on each of the samples of Comparative Examples 2 and 3. The ratios of the areas of the abnormal protrusions of the samples of Comparative Examples 2 and 3 were 2.6% and 4.8%, respectively, more than 2%. From the SEM measurement results, clustering of surrounding magnetic particles was observed.

The formation of the abnormal Ag coating layer as described above lead to increases in the oil absorbency and the viscosity. In the samples of Comparative Examples 2 to 4, all of the oil absorbencies were equal to or greater than 20, and the viscosities were more than 12 Pa·sec.

Although the present disclosure has been described hereinabove with reference to the specific embodiments and the drawings, the description is for illustrative. Those skilled in the art will appreciated that various modifications are possible without departing from the scope of the technical idea of the present disclosure. In addition, the technical ideas described in the respective embodiments may be carried out not only independently but also in combinations. Therefore, the scope of protection of the present disclosure shall be defined by the language of the Claims.

## Claims

1. A magnetic particle comprising a magnetic material core and a metal coating layer provided outside the magnetic material core,
wherein the surface roughness Ra of the magnetic particle is 0.14 µm or less.

2. The magnetic particle according to claim 1, further comprising a metal oxide layer provided as an intermediate layer between the magnetic material core and the coating layer.

3. The magnetic particle according to claim 1 or 2, wherein the metal coating layer is an Ag coating layer having superior reflectivity, and wherein the reflectivity of the magnetic particle for 900 nm light is 60% or more.

4. The magnetic particle according to any one of claims 1 to 3, wherein the particle size (D₉₀) of the magnetic particle is 15 µm or less.

5. The magnetic particle according to any one of claims 2 to 4, insofar as dependent upon claim 2, wherein the magnetic material core (10) is an AlNiCo particle, the intermediate layer (20) is a ZrO₂ layer, and the metal coating layer (30) is a Ag coating layer.

6. Security ink comprising the magnetic particles as claimed in any one of claims 1 to 5.

7. The security ink according to claim 6, wherein the viscosity of the security ink is 12 Pa·sec or less, wherein the said viscosity is a viscosity measured using a rotary viscosity meter for 30 seconds, under conditions of a sample holder distance 0.1 mm, a temperature 40°C, and a shear rate 1,000 S⁻¹·

## Patentansprüche

1. Magnetisches Partikel, umfassend einen Kern aus magnetischem Material und eine außerhalb des Kerns aus magnetischem Material vorgesehene Metallbeschichtungsschicht,
wobei die Oberflächenrauheit Ra des magnetischen Partikels 0,14 µm oder weniger beträgt.

2. Magnetisches Partikel nach Anspruch 1, weiterhin umfassend eine Metalloxidschicht, die als Zwischenschicht zwischen dem Kern aus magnetischem Material und der Beschichtungsschicht vorgesehen ist.

3. Magnetisches Partikel nach Anspruch 1 oder 2, wobei die Metallbeschichtungsschicht eine Ag-Beschichtungsschicht mit hervorragendem Reflexionsvermögen ist und wobei das Reflexionsvermögen des magnetischen Partikels für Licht mit einer Wellenlänge von 900 nm 60 % oder mehr beträgt.

4. Magnetisches Partikel nach einem der Ansprüche 1 bis 3, wobei die Partikelgröße (D₉₀) des magnetischen Partikels 15 µm oder weniger beträgt.

5. Magnetisches Partikel nach einem der Ansprüche 2 bis 4, soweit abhängig von Anspruch 2, wobei der Kern aus magnetischem Material (10) ein AlNiCo-Partikel ist, die Zwischenschicht (20) eine ZrO₂-Schicht ist und die Metallbeschichtungsschicht (30) eine Ag-Beschichtungsschicht ist.

6. Sicherheitstinte, umfassend die magnetischen Partikel nach einem der Ansprüche 1 bis 5.

7. Sicherheitstinte nach Anspruch 6, wobei die Viskosität der Sicherheitstinte 12 Pa·s oder weniger beträgt, wobei die genannte Viskosität eine Viskosität ist, die unter Verwendung eines Rotationsviskosimeters über einen Zeitraum von 30 Sekunden unter den Bedingungen eines Probenhalterabstands von 0,1 mm, einer Temperatur von 40 °C und einer Scherrate von 1.000 s⁻¹ gemessen wird.

## Revendications

1. Particule magnétique comprenant un noyau en matériau magnétique et une couche de revêtement métallique formée à l'extérieur du noyau en matériau magnétique,
où la rugosité de surface Ra de la particule magnétique est inférieure ou égale à 0,14 µm.

2. Particule magnétique selon la revendication 1, comprenant en outre une couche d'oxyde métallique prévue comme couche intercalaire entre le noyau en matériau magnétique et la couche de revêtement.

3. Particule magnétique selon la revendication 1 ou la revendication 2, où la couche de revêtement métallique est une couche de revêtement en Ag présentant une réflectivité supérieure, et où la réflectivité de la particule magnétique pour une lumière de 900 nm est de 60 % ou plus.

4. Particule magnétique selon l'une des revendications 1 à 3, où la taille de particule (D₉₀) de la particule magnétique est de 15 µm ou moins.

5. Particule magnétique selon l'une des revendications 2 à 4, si dépendante de la revendication 2, où le noyau en matériau magnétique (10) est une particule d'AlNiCo, la couche intercalaire (20) est une couche de ZrO₂ et la couche de revêtement métallique (30) est une couche de revêtement en Ag.

6. Encre de sécurité, comprenant les particules magnétiques selon l'une des revendications 1 à 5.

7. Encre de sécurité selon la revendication 6, où la viscosité de l'encre de sécurité est inférieure ou égale à 12 Pa·sec, ladite viscosité étant une viscosité mesurée au moyen d'un viscosimètre rotatif pendant 30 secondes, dans des conditions de distance de porte-échantillon égale à 0,1 mm, de température égale à 40 °C et de taux de cisaillement égal à 1.000 S⁻¹.
